# EUROPÄISCHE PATENTSCHRIFT

(11) **EP 0 951 988 B1**
(45) Veröffentlichungstag und Bekanntmachung des Hinweises auf die Patenterteilung: **28.01.2009**
(21) Anmeldenummer: 99107778.5
(22) Anmeldetag: 20.04.1999
(51) Int. Cl.: B30B 9/30, A01F 15/08, B30B 15/28

(54) **Kanalballenpresse**
Channel baling press
Presse pour balles à canal

(30) Priorität: 23.04.1998 DE 19818127
(43) Veröffentlichungstag der Anmeldung: 27.10.1999
(73) Patentinhaber: Welger Maschinenfabrik GmbH, 38304 Wolfenbüttel (DE)
(72) Erfinder: Wilkens, Dieter Dr.-Ing., 38302 Wolfenbüttel-Ahlum (DE); Röhrbein, Jürgen, 38159 Wahle (DE)

(56) Entgegenhaltungen:
- EP-A- 0 346 586
- DE-A- 1 627 940
- DE-A- 19 644 574
- DE-U- 9 421 133
- FR-A- 2 139 955
- US-A- 3 908 436
- US-A- 4 026 207
- US-A- 4 280 403
- US-A- 4 565 123
- US-A- 5 735 197

## Beschreibung

Die Erfindung betrifft eine fahrbare landwirtschaftliche Kanalballenpresse mit einem in einem Presskanal mittels Schubkurbelgetriebe hin und herbewegbar angetriebenen Presskolben.

Durch die Großballenpresse Quadrant 1200 des Fabrikates "Claas" (Betriebsanleitung CLAAS QUADRANT 1200 Nr. 187420.0 mit Druckvermerk - D - 08.94 - 350 - B.B.) ist beispielsweise eine Überlastsicherung für den Preßantrieb bekannt (siehe auch das Dokument EP-A-0 346 586). Bei zu hoher Preßkolbenkraft wird durch die Durchbiegung der Quertraverse einer an sich festen Getriebeaufhängung um wenige Millimeter ein 2/2 Wegeventil geöffnet und somit der Hydraulikdruck in den Hydraulikzylindern zum Spannen des Preßkanales abgebaut. Bei Entlastung der Presse baut sich der eingestellte Preßdruck wieder auf. Ferner ist zusätzlich eine Scherschraubensicherung zwischen Hauptgetriebe und Schwungrad vorgesehen, von dem der Preßkolbenantrieb erfolgt. Nachteilig ist, daß die Reduzierung des Preßstrangwiderstandes durch die aufgemachten Preßkanalseitenwände relativ träge reagiert, um die Dichtenachteile gering zu halten. Ein weiterer Nachteil ist insbesondere, daß z. B. größere Preßpackungen bei den letzten Hüben eines fertigen Ballens oder Preßstrangblockierungen in nassen Gütern zum Ansprechen der Scherschraubensicherung und damit zum Stillstand der Maschine führen.

Aus der Schrift DE 92 06 232 ist eine Großballenpresse bekannt, die über eine zwischen dem Schwungrad und dem Hauptgetriebe angeordnete Einrichtung zum selbsttätigen Unterbrechen und Wiedereinschalten des Antriebsstranges verfügt. Das Ansprechmoment der Kupplung muß sehr exakt eingestellt sein, da ansonsten die Kupplung bei geringen Überlastungen zu früh oder bei großen Überlastungen zu spät anspricht. Auch hier wird der Kraftfluß unterbrochen mit der Folge, daß nicht kontinuierlich gearbeitet werden kann.

Durch die US-PS 4,565,123 ist eine Kanalballenpresse mit hydraulischem Preßkolbenantrieb und hydraulisch wirkender Preßkanalspanneinrichtung offenbart. Ein Druckschalter im Hydraulikkreislauf des Preßkolbens spricht beim Überschreiten eines vorbestimmten Druckes an und betätigt ein Hydroventil im Hydraulikkreislauf der Preßkanalspanneinrichtung, so daß zur Druckabsenkung Öl abgelassen wird, wodurch sich der Preßkanalquerschnitt erweitert und ein Blockieren des Preßkolbens verhindert werden soll. Wenn der Preßkolben frei arbeitet, wird der Preßkanalspanndruck selbsttätig wieder aufgebaut. Ferner ist ein Druckbegrenzungsventil als Überlastsicherung vorgesehen, die den Betrieb ggfs. unterbricht.

Der US-A 57 35 197 ist eine Verdichtungspresse für Metallartikel und insbesondere für sperrige Ölfilter entnehmbar. Diese Presse ist weder fahrbar noch für landwirtschaftliche Erntegüter verwendbar, weil allein schon die Zuführeinrichtungen und deren Anordnung für diese Materialien ungeeignet sind und zu Verstopfungen führen würden.

In der US-PS 3,350,999 ist eine Ballenpresse beschrieben, die eine Einrichtung aufweist, um am Ende jeden Preßhubes die Preßkanalspanneinrichtung in ihrer Weite kurzzeitig zu öffnen und eine Blockierung des mit der neuen Preßpackung vorzuschiebenden Preßstranges zu vermeiden. Wenn der Hydraulikdruck im Preßkolben-Hydraulikkreis am Ende jeden Preßhubes einen einstellbaren Wert übersteigt, entspannt ein Hydrozylinder den Preßkanal automatisch durch stärkeres Spannen einer Schraubenfeder. Es sollen hohe Leistungsbedarfe durch zu hoch eingestellte Preßkanalspannkräfte vermieden werden.

Nachteitig auch hier das relativ träge Ansprechverhalten über die Entlastung des Spannkanales. Für durch mechanische Schubkurbelgetriebe angetriebene Preßkolben ist diese Lösung nicht geeignet. Ein entscheidender Nachteil liegt auch darin, daß die Ballendichte aufgrund der relativ langen Öffnungsdauer des Preßkanales absinkt, weil alle Preßkanalspannwände geöffnet werden müssen, wenn die gewünschte Wirkung erreicht werden soll.

Ähnlich wirkt auch die in der EP 0235397 B1 dargestellte und beschriebene Einrichtung zum Steuern der Preßkanalspannweite in Abhängigkeit von dem Verschiebewiderstand, den der Ballen während seiner Verschiebebewegung durch Reibung auf die Preßkanalseitenwände ausübt. Die Haltekraft einer Preßkanalspannschiene wird mittels eines zwischen Gestell und Spannschiene angeordneten Hydrozylinders gemessen und zur Steuerung der Preßkanalspannschienen genutzt, um möglichst konstante Preßdichten zu erzielen. Auch hier ist zwischen Schwungrad und Hauptgetriebe eine weitere Überlastsicherung vorgesehen, die den Kraftfluß bei größerer Überlastung unterbricht.

Der Erfindung liegt die Aufgabe zugrunde, die eingangs beschriebene Kanalballenpresse so zu verbessern, daß Belastungsspitzen der Ballenpresse während des Preßvorganges ohne Unterbrechung des Kraftflusses schneller abgebaut und insbesondere Blockierungen der Preß- und Förderelemente im Ansatz vermieden und trotzdem höchste Preßdichten erreicht werden.

Diese Aufgabe wird erfindungsgemäß dadurch gelöst, daß Mittel vorgesehen sind zum elastischen Nachgeben wenigstens eines Bauelementes des Preßsystems in dessen axialer Richtung bei Überschreiten vorbestimmter Preßkolbenkräfte und insbesondere bei Preßkolbenkraftspitzen um einen Weg entsprechend bis etwa der Dicke einer verdichteten Preßpackung. Der Grundgedanke der vorliegenden Erfindung besteht darin, für den zwangsläufig durch ein Schubkurbelgetriebe angetriebenen Preßkolben über einen vorbestimmbaren Kraft- bzw. Wegbereich einen zusätzlichen Freiheitsgrad zu schaffen.

Mit der Erfindung werden folgende Vorteile erzielt:
- 1.: Bei Überlastung wird der Kraftfluß des Kolbenantriebes nicht unterbrochen, so daß kontinuierlich in einem definierten Überlastbereich weiter gearbeitet werden kann ohne irgendwelche Dichtenachteile.
- 2.: Das "Wegpuffern" einer Überlastspitze gibt genügend Zeit, um den Spannkanal bei wiederholten Überlastungen rechtzeitig zum nächsten Preßhub zu öffnen.
- 3.: Auf eine Überlastsicherung zwischen Hauptgetriebe und Schwungrad, insbesondere Scherbolzensicherung, kann verzichtet werden, weil die erfindungsgemäße Einrichtung sehr schnell reagiert und größere Überlastungen sicher vermeidet.
- 4.: Der Ausweichweg bzw. die Ausweichkraft kann zur Belastungsanzeige und ggfs. zum Steuern weiterer Funktionen mittels geeigneter Sensoren genutzt werden, so daß teure Drehmomentmeßnaben entfallen.

Im einzelnen kann die erfindungsgemäße Kanalballenpresse nach Anspruch 2 oder auch nach den Ansprüchen 3 bis 8 vorteilhaft ausgeführt werden. Die Kennlinie des elastischen Bauelementes gemäß Anspruch 8 kann im definierten Überlastbereich z. B. linear sein, wobei der Endwert des definierten Überlastbereiches z. B. 10 % oberhalb des Anfangswertes liegt, bei dem das Ausweichen des Bauelementes beginnt, so daß gegenüber den bisher bekannten Überlastsicherungen durch die erfindungsgemäße Einrichtung sogar Dichteerhöhungen erreichbar sind, weil nämlich der Antriebs-Kraftfluß während der Belastungsspitze, in der der Preßstrang vom Stillstand durch Haftreibung in Bewegung durch die relativ niedrigere Gleitreibung kommt, nicht unterbrochen wird.

In Anspruch 9 ist eine besonders vorteilhafte Gestaltung angegeben zur Steuerung weiterer Funktionen in Abhängigkeit von Parametern des ausweichenden Bauelementes.

Mit der Ausgestaltung gemäß Anspruch 10 kann der Bediener die Kanalballenpresse im optimalen Arbeitsbereich fahren, da erkennbar ist, ob diese unterbelastet oder bereits im definierten Überlastbereich arbeitet.

Mehrere Ausführungsbeispiele des Gegenstands der Erfindung werden nachstehend anhand einer Zeichnung näher erläutert; in der Zeichnung zeigt:
- Fig. 1: einen Längsschnitt einer erfindungsgemäßen Kanalballenpresse in schematischer Darstellung gemäß einer ersten Ausführungsform;
- Fig. 2.: eine Ansicht wie Figur 1 bei einer zweiten Ausführungsform;
- Fig. 3: eine Ansicht wie Figur 1 bei einer dritten Ausführungsform;
- Fig. 4: eine Einzelheit aus Fig. 3 in vergrößerter Darstellung;
- Fig. 5: eine Ansicht einer weiteren Ausführungsform der erfindungsgemäßen Kanalballenpresse und
- Fig. 6: eine Ansicht einer fünften Ausführungsform.

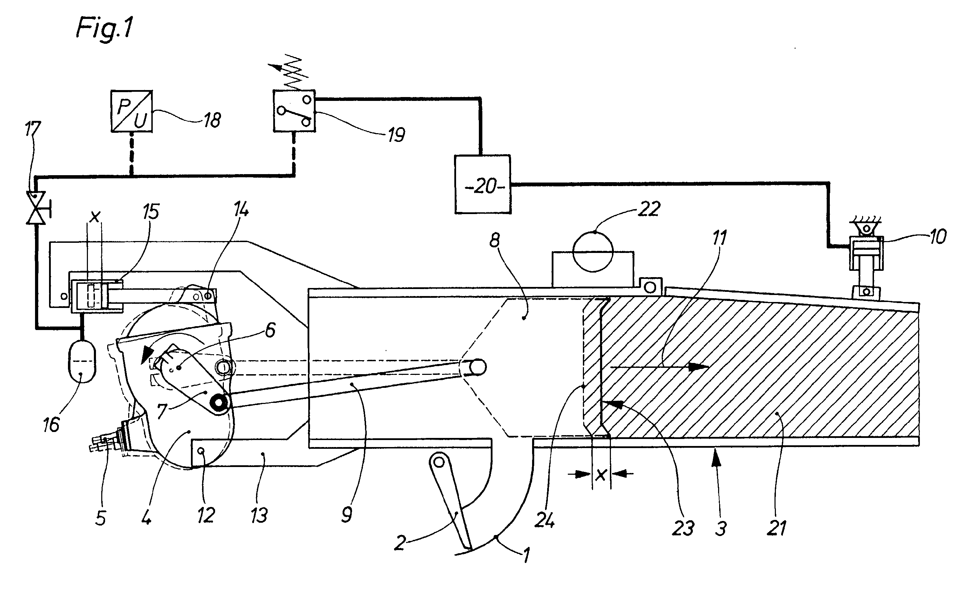

Die in Fig. 1 dargestellte Kanalballenpresse besteht im wesentlichen aus einem Zuführkanal 1 mit einer Fördereinrichtung 2, die Halmgutmaterial von unten in einen Preßkanal 3 mit rechteckigem Querschnitt hineinfördert.

Im vorderen Abschnitt des Preßkanales 3 ist ein Hauptgetriebe 4 angeordnet. Es besitzt eine nach vorn gerichtete Welle 5 zum Anschluß an die Schlepperzapfwelle, eine nicht dargestellte Schwungscheibe und eine Querwelle 6, welche beidseits aus dem Getriebegehäuse herausgeführt ist. Die Querwelle 6 trägt beidseits je einen Kurbelarm 7.

Im mittleren Abschnitt des Preßkanales 3 ist ein Preßkolben 8 gelagert. Im Preßkolben 8 sind zwei parallele Pleuelstangen 9 angelenkt, welche anderenends auf den Kurbelarmen 7 gelagert sind.

Im hinteren Abschnitt des Preßkanales 3 ist eine an sich bekannte Preßkanal-Spanneinrichtung 10 angeordnet, um durch konische Verengung des Preßkanales 3 die Preßdichte zu steuern.

Das Hauptgetriebe 4 ist unten um eine quer zur Preßrichtung 11 gelegene Achse 12 schwenkbar mit dem Pressengestell 13 verbunden, während zwischen oberem Getriebelager 14 und Pressengestell 13 ein einfachwirkender Hydrozylinder 15 angeordnet ist, dessen Zylinderseite mit einem Hydro-Druckspeicher 16 verbunden ist. Der Hydrospeicher 16 steht über ein Absperrventil 17 und einen Drucksensor 18 oder Druckschalter 19 mit einer Steuereinheit 20 in Verbindung zur Steuerung des Druckes in der Preßkanal-Spanneinrichtung 10. Der Anfangsdruck im Hydrospeicher 16 ist so eingestellt bzw. gewählt, daß der Preßkolben 8 bei Nichterreichen dieses Anfangsdruckes wie bisher zwischen vorderer und hinterer Endstellung hin und herfährt und das Halmgut zu einem Preßstrang 21 verdichtet, der mittels einer Bindeeinrichtung 22 in bekannter Weise zu einzelnen Ballen abgebunden wird.

Überschreiten die Preßkolbenkräfte diesen Anfangsdruck, so verschwenkt das Hauptgetriebe 4 um die untere Achse 12 in einem definierten Bereich entgegen dem Uhrzeigersinn, bis entweder der definierte Enddruck des Hydrospeichers 16 erreicht ist, der z. B. 10 - 20 % über dem Anfangsdruck liegt oder bis der Hydrokolben 15 seine Endlage erreicht. Durch dieses Verschwenken des Hauptgetriebes 4 erhält der Preßkolben 8 in dem durch die max. Ausweichkraft oder den max. Ausweichweg definierten Bereich X, entsprechend etwa der Dicke einer verdichteten Preßpackung, also je nach Material und Dichte bezogen auf den Kolbenweg ca. 3 bis 8 cm, einen variablen Totpunkt. In Fig. 1 ist die Preßendstellung 23 der Kolbenstirnseite in Strecklage vom Pleuel, Kurbel in Vollinie eingezeichnet, während die Ausweichposition 24 gestrichelt dargestellt ist. Bei Wegfall der Überlast schwenkt das Hauptgetriebe 4 selbsttätig zurück. Eine in diesen Fällen bisher erforderliche Überlastsicherung zwischen Schwungscheibe und Hauptgetriebe 4 zur Unterbrechung des Kraftflusses spricht nicht mehr an und kann damit entfallen. Auf diese kann auch deshalb verzichtet werden, weil diese Einrichtung nun genügend Zeit gibt, um bei noch größeren Überlastungen mittels Drucksensor 18 oder Druckschalter 19 oder Endlagenschalter des Hydrozylinders 15 über die auf den Hydrozylinder der Preßkanal-Spanneinrichtung 10 wirkende Steuereinrichtung 20 diese rechtzeitig zu entlasten. Ferner gestattet die erfindungsgemäße Einrichtung dem Bediener der Kanalballenpresse auf einfache Weise das Erkennen der aktuellen Preßbelastung, z. B. durch Kolbenwegsensoren oder Drucksensoren, wodurch er in die Lage versetzt wird, diese im optimalen Belastungsbereich ohne jegliche Störungen zu betreiben.

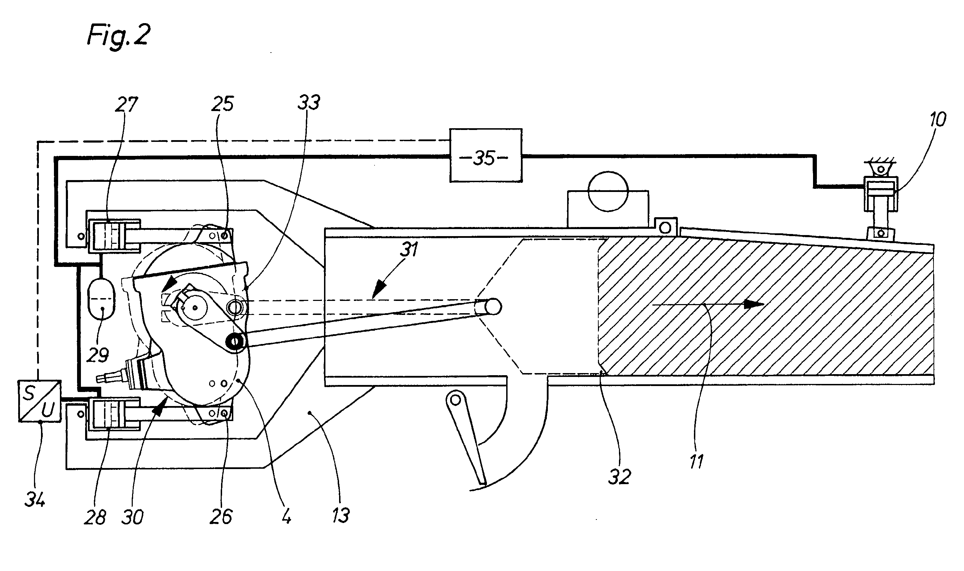

Bei dem in Figur 2 dargestellten Ausführungsbeispiel ist sowohl das obere Lager 25 der Aufhängung des Hauptgetriebes 4 als auch das untere Lager 26 über je einen Hydrozylinder 27, 28 mit dem Pressengestell 13 verbunden. Beide Hydrozylinder 27, 28 sind entweder gemeinsam oder einzeln mit Hydrospeichern 29 verbunden, wodurch das Hauptgetriebe 4 bei Erreichen des definierten Ausweichbereiches translatorisch in der Preßrichtung 11 entgegengesetzte Richtung ausweicht, siehe zugehörige gestrichelt gezeichnete Getriebe-, 30, Pleuel- 31 und Kolbenposition 32. Beim Rückgang des Preßkolbens 8 geht das Getriebe 4 selbsttätig in seine in Vollinie gezeichnete Ausgangsposition 33 zurück. Für größere Überlastungen ist ein Wegsensor 34 am Hydrozylinder 15 vorgesehen, der ggfs. über eine Steuereinheit 20 die Preßkanal-Spanneinrichtung 10 entlastet. Es versteht sich, daß trotz dieses variablen Totpunktes des Preßkolbens 8 die Zuordnung Preßkolben 8 zu Bindenadel 10 so ausgelegt sein muß, daß diese im Schutz des Preßkolbens hochgeht.

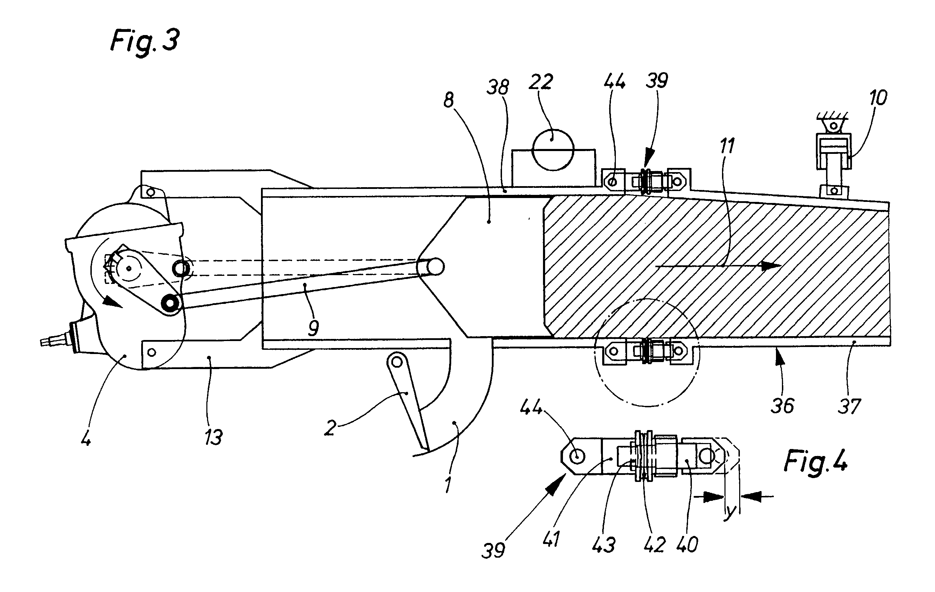

In dem in Figur 3 dargestellten Ausführungsbeispiel ist der hintere Preßkanalabschnitt 36, in dem die Ballenbildung erfolgt, in Preßrichtung 11 nachgiebig gelagert. Üblicherweise sind alle vier Seitenwände 37 dieses Preßkanalabschnittes 36 zur Dichteeinstellung schwenkbar am mittleren Preßkanalabschnitt 38 angelenkt. Jede Seitenwand 37 ist nunmehr durch ein vorgespanntes Federelement 39 mit dem mittleren Preßkanalabschnitt 38 verbunden. Wie am besten aus Fig. 4 ersichtlich, wird das Federelement 39 von einer Kolben/Zylindereinheit 40/41 gebildet, die durch Zwischenschaltung von z. B. Tellerfedern 42 unter Druck vorgespannt sind. Eine Widerlagerplatte in Form einer Gegenmutter 43 für die Tellerfedern 42 ist am Kolben 40, die andere am Zylinder 41 angebracht. Der Zylinder 41 ist mittels Doppellasche/Bolzenverbindung 44 mit dem mittleren Preßkanalabschnitt 38 verbunden, während der Kolben 40 auf gleiche Art jeweils an einer Seitenwand 37 angelenkt ist. Bei Überlastung werden die Tellerfedern 42 um ein Maß Y zusammengedrückt bzw. die Kolben/Zylindereinheit 40/41 auseinandergezogen, so daß trotz zwangläufigen Antriebes des Preßkolbens 8 durch das teleskopische Ausweichen des hinteren Preßkanalabschnittes 36 in Preßrichtung 11 die erfindungsgemäße Wirkung auf konstruktiv besonders einfache Art und Weise erzielt wird. Als Endwerte des definierten Ausweichbereiches können z. B. die Werte dienen, wenn die Tellerfedern auf Block gehen. Ferner kann der Ausweichweg durch mechanische Zeigerelemente signalisiert werden oder auch zur Steuerung anderer Funktionen genutzt werden.

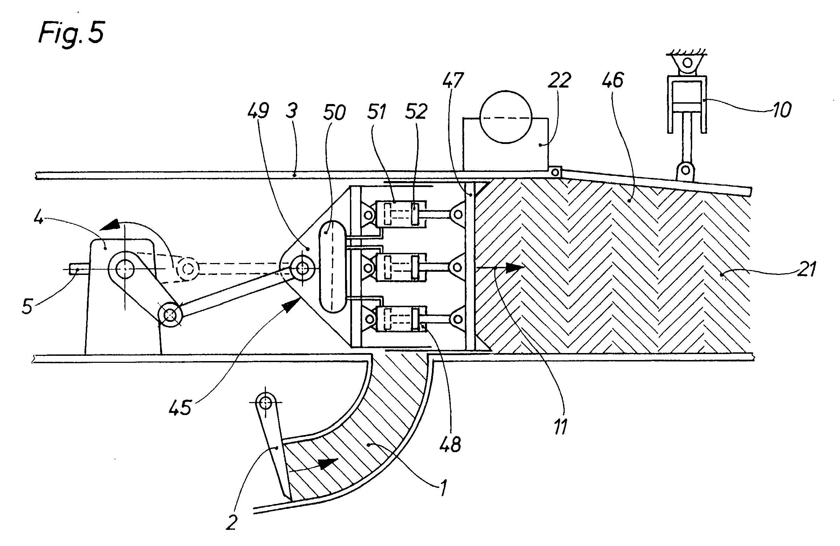

Ein weiteres Ausführungsbeispiel zeigt Figur 5. Hierbei ist die Nachgiebigkeit des Preßsystems nur im Preßkolben 45 angeordnet. Die dem Preßstrang 46 zugewandte Stirnwand des Preßkolbens 45 ist als Preßplatte 47 ausgebildet, welche über z. B. drei einfachwirkende Hydrozylinder 48 verfahrbar mit dem Rumpfteil 49 des Preßkolbens 45 verbunden ist. Alle Hydrozylinder 48 sind kolbenseitig durch einen gemeinsamen Hydro-Druck-Speicher 50 vorgespannt, derart, daß die Preßplatte 47 bei vorwählbarem Anfangs- bis Enddruck entgegen der Preßrichtung 11 zurückweicht, siehe gestrichelt dargestellte Hydrokolbenposition 51 und bei Wegfall der Überlastung selbsttätig in die in Vollinie dargestellte Position 52 fährt.

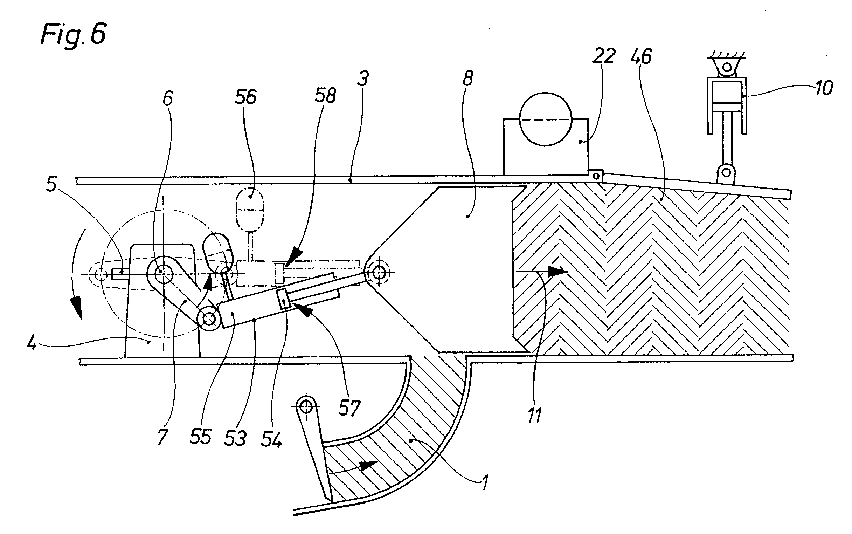

In dem in Fig. 6 dargestellten Ausführungsbeispiel ist nur die Pleuelstange 53 längenveränderlich ausgestaltet. Jede Pleuelstange 53 ist als einfach wirkende Kolben/Zylindereinheit 54/55 ausgebildet, die kolbenseitig über einen Hydro-Druck-Speicher 56 vorgespannt wird. Bei Überlastungen weicht der Hydrokolben 54 aus seiner in Vollinien gezeigten Normalposition 57 in die in Strichpunktlinie dargestellte Ausweichposition 58, wodurch der Preßkolben 8 einen variablen Totpunkt erhält. Die Erfindung ist insbesondere anwendbar auf fahrbare Großballenpressen für landwirtschaftliche Erntegüter mit hoher Durchsatzleistung, aber bringt auch bei stationären Ballenpressen für Papier und Kartonagen oder Folie die genannten Vorteile.

## Patentansprüche

1. Fahrbare landwirtschaftliche Kanalballenpresse mit einem in einem Presskanal (3) mittels Schubkurbelgetriebe (4, 7, 9) hin und herbewegbar angetriebenen Presskolben (8), **dadurch gekennzeichnet, dass** Mittel (12, 14, 15, 16, 27, 28, 29, 39, 47 bis 50, 53, 56) vorgesehen sind zum elastischen Nachgeben wenigstens eines Bauelementes (4, 36 ,45,53) des Presssystems (3, 4, 7, 8, 9) in dessen axialer Richtung bei Überschreiten vorbestimmter Presskolbenkräfte und insbesondere bei Presskolbenkraftspitzen um einen Weg entsprechend bis etwa der Dicke einer verdichteten Presspackung.

2. Kanalballenpresse nach Anspruch 1, **gekennzeichnet durch** ein schwenkbar gelagertes Hauptgetriebe (4), wobei wenigstens ein Getriebelager (14) **durch** ein elastisches Zwischenglied (15,16) mit dem Pressengestell (13) verbunden ist.

3. Kanalballenpresse nach Anspruch 1, **gekennzeichnet durch** ein translatorisch gegen die Kraft zweier elastischer Zwischenglieder (27 bis 29) verschiebbares Hauptgetriebe (4).

4. Kanalballenpresse nach Anspruch 1, **dadurch gekennzeichnet, dass** die Verbindungseinrichtungen Pleuelstange (9), Kurbelarm (7) zwischen Hauptgetriebe (4) und Presskolben (8) wenigstens ein elastisches Zwischenglied (47, 48, 50, 53, 56) aufweisen.

5. Kanalballenpresse nach Anspruch 4, **dadurch gekennzeichnet, dass** die Pleuelstange (9) oder der Kurbelarm (7) mittels Energiespeicher (56) teleskopisch federnd ausgebildet ist.

6. Ballenpresse nach Anspruch 1, **dadurch gekennzeichnet, dass** der Presskolben (8) eine teleskopisch federnde Pressplatte (47) aufweist.

7. Kanalballenpresse nach Anspruch 1, **dadurch gekennzeichnet, dass** ein ausgangsseitiger Abschnitt (36) des Presskanales (3), welcher eine bekannte Presskanal-Spanneinrichtung (10) aufweist, durch elastische Zwischenglieder (39) in Pressrichtung (11) nachgiebig mit dem den Presskolben (8) aufnehmenden Presskanalabschnitt (3) verbunden ist.

8. Kanalballenpresse nach einem der vorhergehenden Ansprüche, **dadurch gekennzeichnet, dass** das elastische Bauelement (4,36,45,53) oder das Zwischenglied (15, 16; 27-29), einen hoch vorgespannten Hydrospeicher (16,29,50,56) mit Hydrozylinder (15,27,28,48,54) oder ein vorgespanntes Federelement (39) aufweist.

9. Kanalballenpresse nach einem der vorhergehenden Ansprüche, **dadurch gekennzeichnet, dass** der Ausweichung oder die Ausweichkraft des elastischen Bauelementes (4, 36, 45, 53) durch geeignete Mittel, wie Anschläge, Druck- oder Kraftsensoren (18,19,34), begrenzt sind, welche bei vorwählbarer Ansprechschwelle, z. B. wiederholtem Ausweichen des elastischen Bauelementes (4, 36, 45, 53), zusätzlich eine an sich bekannte Presskanal-Spanneinrichtung (10) zur vorübergehenden Erweiterung des Presskanalspannquerschnittes steuern und/oder bei einer weiteren Ansprechschwelle die Antriebsverbindung einer Fördereinrichtung unterbrechen, so dass kein Gut mehr zugeführt werden kann.

10. Kanalballenpresse nach einem der vorhergehenden Ansprüche, **dadurch gekennzeichnet, dass** Mittel, z. B. Druck- oder Wegaufnehmer, vorgesehen sind, um dem Bediener der Kanalballenpresse das Ausweichen des elastischen Bauelementes zu signalisieren.

## Claims

1. A mobile agricultural channel baling press with a pressing piston (8) which can be driven to and fro in a pressing channel (3) by means of a slider-crank mechanism (4, 7, 9), **characterised in that** means (12, 14, 15, 16, 27, 28, 29, 39, 47 to 50, 53, 56) are provided for elastic yielding of at least one structural element (4, 36, 45, 53) of the pressing system (3, 4, 7, 8, 9) in the axial direction thereof upon exceeding predetermined pressing-piston forces and in particular upon pressing-piston force peaks by a path corresponding to up to about the thickness of a compacted press pack.

2. A channel baling press according to Claim 1, **characterised by** a pivotably mounted main gear mechanism (4), with at least one gear bearing (14) being connected to the press frame (13) by an elastic intermediate member (15, 16).

3. A channel baling press according to Claim 1, **characterised by** a main gear mechanism (4) which is displaceable in translation counter to the force of two elastic intermediate members (27 to 29).

4. A channel baling press according to Claim 1, **characterised in that** the connecting means connecting-rod (9) and crank arm (7) between main gear mechanism (4) and pressing piston (8) have at least one elastic intermediate member (47, 48, 50, 53, 56).

5. A channel baling press according to Claim 4, **characterised in that** the connecting-rod (9) or the crank arm (7) is designed to be telescopically resilient by means of energy accumulators (56).

6. A baling press according to Claim 1, **characterised in that** the pressing piston (8) has a telescopically resilient pressing plate (47).

7. A channel baling press according to Claim 1, **characterised in that** an output-side section (36) of the pressing channel (3), which section has a known pressing-channel tensioning means (10), is connected resiliently in the pressing direction (11) by elastic intermediate members (39) to the pressing-channel section (3) which receives the pressing piston (8).

8. A channel baling press according to one of the preceding claims, **characterised in that** the elastic structural element (4, 36, 45, 53) or the intermediate member (15,16; 27 - 29) has a highly pre-tensioned hydraulic accumulator (16, 29, 50, 56) with hydraulic cylinder (15, 27, 28, 48, 54) or a pre-tensioned spring element (39).

9. A channel baling press according to one of the preceding claims, **characterised in that** the deflection or the deflection force of the elastic structural element (4, 36, 45, 53) is limited by suitable means, such as stops, pressure or force sensors (18, 19, 34) which at a pre-selectable response threshold, i.e. repeated deflection of the elastic structural element (4, 36, 45, 53) additionally control a pressing-channel tensioning means (10) known *per se* for temporarily widening the pressing-channel tensioning cross-section and/or at a further response threshold interrupt the drive connection of a conveying means, so that no more material can be supplied.

10. A channel baling press according to one of the preceding claims, **characterised in that** means, e.g. pressure or displacement transducers, are provided in order to signal to the operator of the channel baling press that the elastic structural element has been deflected.

## Revendications

1. Presse à balles à canal agricole mobile, comportant un piston de compactage (8), actionné en va-et-vient par un mécanisme bielle-manivelle (4, 7, 9) dans un canal de compactage (3), **caractérisée en ce qu'**il est prévu des moyens (12, 14, 15, 16, 27, 28, 29, 39, 47 à 50, 53, 56) pour la flexion élastique d'au moins un élément (4, 36, 45, 53) du système de compactage (3, 4, 7, 8, 9) dans la direction axiale de celui-ci en cas de dépassement des forces prédéterminées du piston de compactage et, en particulier, en présence de pointes de force du piston de compactage, sur une distance correspondant jusqu'à sensiblement l'épaisseur d'une balle compactée.

2. Presse à balles à canal selon la revendication 1, **caractérisée par** un engrenage principal (4) monté pivotant, au moins un palier (14) de l'engrenage étant relié au châssis (13) de la presse par l'intermédiaire d'un élément intermédiaire (15, 16) élastique.

3. Presse à balles à canal selon la revendication 1, **caractérisée par** un engrenage principal (4) apte à être déplacé en translation à l'encontre de la force de deux éléments intermédiaires (27 à 29) élastiques.

4. Presse à balles à canal selon la revendication 1, **caractérisée en ce que** les dispositifs de jonction, à savoir la bielle (9), la manivelle (7), comportent entre l'engrenage principal (4) et le piston de compactage (8) au moins un élément intermédiaire (47, 48, 50, 53, 56) élastique.

5. Presse à balles à canal selon la revendication 4, **caractérisée en ce que** la bielle (9) ou la manivelle (7) sont réalisées de manière élastiquement télescopique au moyen d'un accumulateur d'énergie (56).

6. Presse à balles à canal selon la revendication 1, **caractérisée en ce que** le piston de compactage (8) comporte une plaque de compactage (47) élastiquement télescopique.

7. Presse à balles à canal selon la revendication 1, **caractérisée en ce qu'**un tronçon (36) du côté sortie du canal de compactage (3), qui comporte un dispositif de serrage (10) connu pour le canal de compactage, est relié de manière flexible dans le sens de compactage (11), par des éléments intermédiaires (39) élastiques, avec le tronçon du canal de compactage (3) logeant le piston de compactage (8).

8. Presse à balles à canal selon l'une quelconque des revendications précédentes, **caractérisée en ce que** l'élément élastique (4, 36, 45, 53) ou l'élément intermédiaire (15, 16 ; 27 - 29), comporte un réservoir hydraulique (16, 29, 50, 56) fortement précontraint, avec des vérins hydrauliques (15, 27, 28, 48, 54) ou un élément de ressort (39) précontraint.

9. Presse à balles à canal selon l'une quelconque des revendications précédentes, **caractérisée en ce que** le mouvement d'écartement ou la force d'écartement de l'élément élastique (4, 36, 45, 53) sont limités par des moyens appropriés, tels que des butées, des capteurs de pression ou de force (18, 19, 34), qui, en présence d'un seuil de réponse pouvant être présélectionné, tel qu'un mouvement d'écartement réitéré de l'élément élastique (4, 36, 45, 53), commandent en plus un dispositif de serrage (10), connu en soi, pour le canal de compactage afin d'élargir provisoirement la section de serrage du canal de compactage et/ou, en présence d'un autre seuil de réponse, interrompent la liaison d'entraînement d'un dispositif de transport, de telle sorte que les produits ne peuvent plus être acheminés.

10. Presse à balles à canal selon l'une quelconque des revendications précédentes, **caractérisée en ce qu'**il est prévu des moyens, tels que des capteurs de pression ou de déplacement, afin de signaler à l'utilisateur de la presse à balles à canal le mouvement d'écartement de l'élément élastique.
